# EUROPEAN PATENT SPECIFICATION

(11) **EP 2 423 648 B1**
(45) Date of publication and mention of the grant of the patent: **14.10.2015**
(21) Application number: 10174660.0
(22) Date of filing: 31.08.2010
(51) Int. Cl.: G01F 1/66

(54) **Ultrasonic flow meter with insert fixed by locking finger**
Ultraschallströmungsmesser mit einem durch einen Verriegelungsfinger befestigten Einsatz
Débitmètre ultrasonique doté d'un insert fixé par un doigt de verrouillage

(43) Date of publication of application: 29.02.2012
(73) Proprietor: KAMSTRUP A/S, 8660 Skanderborg (DK)
(72) Inventor: Borring, Peter Nordlund, DK-7100, Vejle (DK)
(74) Representative: Plougmann & Vingtoft A/S

(56) References cited:
- EP-A1- 0 681 162
- EP-A1- 0 790 490
- EP-A1- 0 897 101
- EP-A1- 2 267 416
- EP-A1- 2 278 281
- EP-A2- 1 775 560

## Description

### FIELD OF THE INVENTION

The invention relates to an ultrasonic flow meter, such as for ultrasonic measurements of fluid flow as used e.g. in a consumption meter.

### BACKGROUND OF THE INVENTION

Ultrasonic flow meters for measuring fluid flow in connection with charging of a consumed quantity (e. g. heat, cooling, water or gas) typically have a metallic or polymeric housing, with a cavity in the form of a through-going hole for receiving the fluid flow to be measured. Connection means to other fluid flow elements are present in each of the housing's ends. For manufacturing of such flow meters, it is advantageous to be able to pre-assemble a number of elements, since this may lead to a simplified overall assembly process.

EP 1 978 337 A1 discloses an ultrasonic flow meter with an insert having two ultrasonic reflectors and a measuring tube. This insert is suited for insertion into the housing from one end of the through-going opening through the housing. The position of the insert is fixed in relation to the housing by means of a fixing element mounted in a separate opening of the housing and sealed with an O-ring. It is a problem with the flow meter disclosed in EP 1 978 337 A1 that the fixing of the insert in the housing requires several elements, i.e. a fixing element, a sealing ring, and a separate opening in the housing to enable engagement of the fixing element with the insert. Furthermore, the separate opening and sealing necessitated by the fixing element introduces a source of error in the flow meter, since a leakage may occur here.

EP 0 897 101 B1 discloses an ultrasonic flow meter, with separate reflector inserts which are arranged for insertion into the housing from respective ends of the through-going opening of the housing. The reflector inserts are fixed in a longitudinal direction by means of snap engagement. The flow meter disclosed in EP 0 897 101 B1 requires a number of assembly steps, since first one of the inserts must be snapped into position from one end of the housing, then the measuring tube must be inserted from the opposite end, and finally the second insert must be snapped into position. Thus, a number of single elements are required, and several steps are required in the final assembly state of the meter. Still further, the insert are not fixed in a rotational direction in relation to the housing.

EP 1 775 560 A2 discloses an ultrasonic flow meter with a flow straightener for removing flow disturbances. The disclosure show an embodiment of a flow meter where the reflector arrangement and the measuring tube is provided as a sub-assembly.

EP 2 278 281 A1, which is prior art under Art. 54(3) EPC, discloses an ultrasonic flow meter which has an insert which can be assembled as a unit outside the flow meter and inserted into the flow passage and locked in position inside by means of a locking means comprising protrusions or indentations. The disclosure does however not disclose the use of a locking finger.

EP 2 267 416 A1, which is prior art under Art. 54(3) EPC, discloses an ultrasonic flow meter which comprise an indentation positioned below each of the openings for the ultrasonic transducers, and where the indentations are used in connection with locking the reflectors in position. The disclosure does however not disclose the presence of a protrusion in the reflectors for receiving at least part of a locking finger.

### SUMMARY OF THE INVENTION

It may be seen as an object of the present invention to provide an improved ultrasonic flow meter which has a low level of complexity regarding manufacturing, in particularly in connection with assembly of the flow meter, and still is suited for high precision measurements and provide a long life-time.

The invention provides an ultrasonic flow meter unit arranged to measure a flow rate of a fluid, the meter unit comprising
- a housing having a through-going opening with an inner surface, at least two openings for receiving at least two associated ultrasonic transducers, and an indentation positioned in an area of the inner surface being reachable from at least one of the openings for receiving the ultrasonic transducers with a straight tool for making the indentation, and
- an insert with dimensions enabling insertion of the insert into the housing from one end of the through-going opening, the insert comprising
   - a reflector arrangement comprising at least two reflectors arranged to reflect an ultrasound signal emitted from an associated ultrasonic transducer,
   - a measuring tube arrangement comprising a measuring tube with a flow channel for receiving the fluid, and
   - a locking finger with a protrusion arranged for engagement with the protrusion, so that the locking finger is adapted to lock the insert in a longitudinal direction and in a rotational direction within the housing in a predetermined fixed relationship relatively to the associated ultrasonic transducers, wherein the reflector arrangement is provided with a cavity for receiving at least the part of the locking finger with the protrusion, so that the locking finger is able to bend into the reflector arrangement.

Such flow meter unit is advantageous, since it can be manufactured in a highly automated manufacturing process with a limited number of sub-assembly operations. The insert can be manufactured, and possibly sub-assembled, separate from the housing and secured in the housing by insertion from one end of the through-going opening. Thus, the housing can be assembled with measuring tube and reflectors in a simple operation without the need for subsequent steps of fastening these parts to the housing to fix or lock the position of these parts within the housing. This is obtained by the locking finger and indentation arrangement that can be formed to click or snap lock function.

With the insert being locked in position relative to the housing, the insert also has a fixed position relative to the openings for the associated ultrasonic transducer, and thus it is ensured that the reflectors have a fixed position relative to the ultrasonic transducers, once they are mounted in these openings.

In embodiments, the inner diameter of the through-going opening is such that the insert fits into the through-going opening with a suitable clearing. Thus, the inner diameter of the through-going opening should be larger than the largest diameter of the circumscribed circle of the cross section of the insert in the plane perpendicular to the though-going axis and along the though-going axis. In preferred embodiments, the inner diameter of the through-going opening is within the interval 5 mm to 150 mm, such as within the interval 10 mm to 100 mm, such as within the interval 25 mm to 75 mm, such as 50 mm.

In embodiments, the at least two openings for receiving the associated ultrasonic transducers are circular holes, or holes of other shapes, with sizes arranged to receive ultrasonic transducers, or groups of ultrasonic transducers. In case of holes with a circular cross sections, a diameter of such holes may be such as 5 mm to 40 mm, such as 10 mm to 20 mm.

Especially, the flow meter unit is suited for flow meters with a metal housing which requires machining during manufacture, such as a metal housing which is formed by hot press moulding followed by machining. Due to the positioning of the indentation that forms part of the locking mechanism, the indentation can be made without special tools, e.g. the indentation can be a hole positioned such that it can be drilled through one of the openings for receiving a transducer.

In one embodiment, the indentation is provided in an area of the inner surface defined by a perpendicular projection of the area of one of the openings for receiving an associated ultrasonic transducer onto the inner surface. Hereby it is easy to provide the indentation in the form of a hole drilled through one of the openings for receiving a transducer. The indentation is typically circularly or elongated, since these shapes are easily made with standard drills.

The locking finger may comprise an elongated member integrally formed with a structure of the insert, having a section of attachment at one end and the protrusion positioned in the opposite end, and wherein the elongated member is shaped such that the protrusion is movable relative to the insert structure. In this embodiment, the locking finger can be shaped as a rather simple structure integrally formed together, e.g. cast, with a part of the insert. The elongated member may be bendable and thus allow the protrusion to move in relation to the insert structure, e.g. the protrusion may be able to move in a resilient manner. Thereby, the locking finger can serve to provide the effect of locking the insert together with the housing, thus fixing the position of measuring tube and reflectors relative to the housing, once it has been inserted in the housing and the protrusion has moved into engagement with the indentation.

According to the invention, the reflector arrangement is provided with a cavity for receiving at least part of the locking finger, so that the locking finger is able to bend into the reflector arrangement, e.g. during insertion of the insert into the housing.

The reflector arrangement and the measuring tube arrangement may be provided as separate entities that can be assembled to form the insert. Furthermore, one design of a reflector arrangement can be combined with different measuring tube arrangements, e.g. having different measuring channel diameters, thus allowing a high versatility of single pre-fabricated parts.

In one embodiment, the locking finger is formed integrally with the measuring tube arrangement. Alternatively, the locking finger may be formed integrally with the reflector arrangement. In embodiments, the reflector arrangement and/or the measuring tube arrangement are provided as separate monolithic entities. E.g. the reflector arrangement and the measuring tube arrangement may be formed by polymeric materials, e.g. formed in a casting process. The polymeric material may be selected from, but is not limited to, the group consisting of polyphenylene sulphide (PPS), polyether sulphone (PES) and Polyether Sulphone (PSU). It is noted that the properties of the polymeric materials can be customized by adding certain additives prior to the moulding process, affecting the material properties such as stiffness, density or the acoustic impedance. Examples of potential additives include reinforcement materials such as glass fibres, density increasing fillers such as chalk (calcium carbonate, CaC03) or powdery stainless steel raising the acoustic impedance of the material.

The inner surface may be provided with a contact face to engage with an associated contact face of the insert, the contact face of the inner surface being position upstream in a flow direction with respect to the locking finger. Hereby, the insert is further supported in withstanding the flow pressure.

In embodiments, the housing is a metal housing, such as a housing made of a metal alloy such as brass, red brass, stainless steel, or other suitable casting alloys.

In embodiments, the flow meter unit is or is part of an ultrasonic flow meter. Especially, such flow meter may be or may be part of a charging consumption meter, e.g. a water meter, gas meter, heat meter, or cooling meter. The consumption meter may be a legal meter, i.e. a meter which is subdued to regulatory demands. Such regulatory demands may be demands to the precision of the measurements.

In a consumption meter, the associated ultrasonic transducers are mounted in the at least two openings of the housing. Moreover, the consumption meter further comprises a measurement circuit operationally connected to the ultrasonic transducers and arranged to determine a value representing the flow rate. The ultrasonic transducers and the measuring circuit may in embodiments be provided as a unit adapted to be mounted onto the housing. Additionally, a consumption meter is normally equipped with a calculator unit which based on the value representing the flow rate is adapted to calculate a consumed quantity, and optionally additional quantities. The calculator unit may be a separate unit or a unit combined with the measuring circuit for operating the transducers.

### BRIEF DESCRIPTION OF THE DRAWINGS

Embodiments of the invention will be described, by way of example only, with reference to the drawings, in which
Fig. 1 illustrates a schematic cross-sectional view of an ultrasonic flow meter with the insert inserted in the housing,
Fig. 2 illustrates a schematic cross-sectional view of the insert of the embodiment shown in Fig. 1,
Fig. 3 illustrates a schematic side view of the insert of Fig. 2,
Fig. 4 illustrates a schematic 3D view of the bottom part of the insert, and
Fig. 5 illustrates a schematic cross-sectional view of the insert in a semi-assembled state.

### DESCRIPTION OF EMBODIMENTS

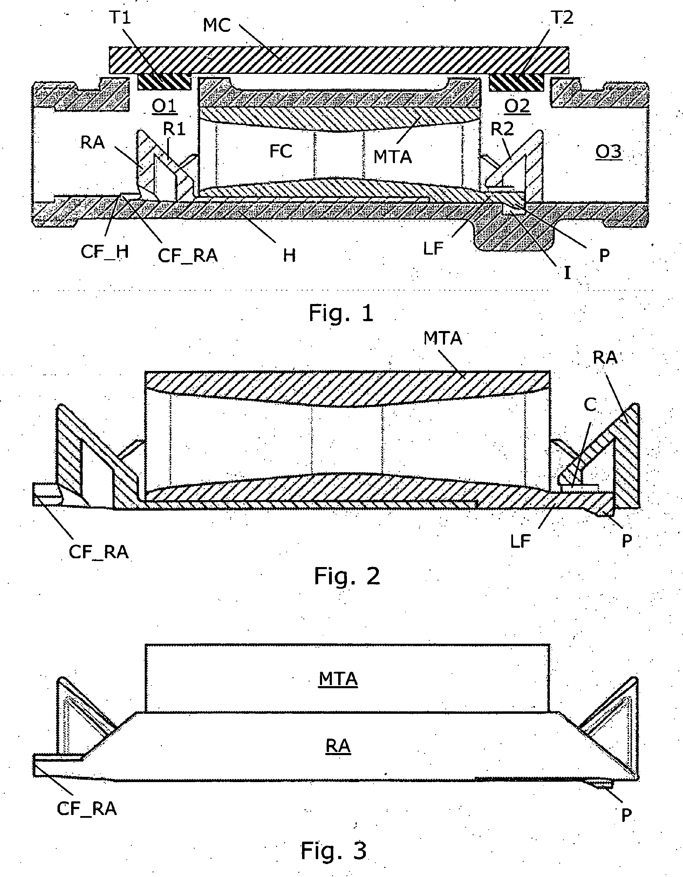

Fig. 1 shows a schematic cross-section of an embodiment of an ultrasonic flow meter with a metal housing H, with two openings O1, O2 arranged to receive respective ultrasonic transducers T1, T2. In the shown embodiment, the two transducers T1, T2 are mounted on a PCB with measurement circuit MC electrically connected to the transducers T1, T2 and arranged to operate them. Additional elements, such as protection membranes for the transducers and sealing elements, may be present in an operating flow meter. The housing further comprises a through-going opening 03 for receiving a fluid flow. The housing H may be a machined block of metal alloy, where the openings O1, O2, O3 are drilled.

The housing H has an indentation I, e.g. a circular hole, positioned directly under the transducer opening 02, thus allowing the indentation I to be formed easily by drilling. As seen, the indentation engages with the protrusion P position at the end of the elongated locking finger LF. The locking finger LF with the protrusion P is formed integrally with the measuring tube arrangement MTA which is formed as a separate monolithic unit separate from the reflector arrangement RA which is formed as another separate unit arranged for engagement with the measuring tube arrangement MTA. The measuring tube arrangement is shaped to provide a flow channel FC inside the measuring tube. The reflector arrangement RA is also preferably formed as one monolithic unit which includes two reflectors R1, R2 which are both angled so as to reflect ultrasonic signals between the two transducers T1, T2 in order to ensure that the ultrasonic signals travel through the flow channel FC. The reflecting surfaces of the reflectors R1, R2 are angled 45° relative to the direction of the fluid flow through the flow channel FC.

During manufacturing, separate units forming the reflector arrangement RA and the measuring tube arrangement MTA are first assembled to form an insert. Subsequently the insert is inserted into one end of the through-going opening 03 of the housing H where the protrusion P on the resilient locking finger LF serves to lock the insert into the correct position relative to the housing H, both with respect to rotation and with respect to longitudinal movement. The resilient effect of the locking finger LF is obtained by shaping the finger as an elongated member with dimensions adjusted in relation to the material in which it is formed, such that a suitable resilient effect is obtained to allow bending of the finger LF during insertion of the insert, but still provide a sufficiently tight fit of the protrusion P into the indentation I to ensure that the position of the insert is properly locked.

In the shown embodiment, the insert is arranged for insertion from the opening 03 to the right, since the reflector arrangement RA has a contact face CF_RA arranged to face a corresponding contact face CF_H on the housing to provide further support to the insert to sustain the pressure from the fluid flow. The locking finger LF and the protrusion P are shaped such that the protrusion P clicks into the indentation I when the insert is inserted in its correct position, i.e. when the contact faces CF_RA, CF_H meet, and thus the resilient locking finger serves to lock the position of the insert within the through-going opening 03 of the housing H.

Fig. 2 shows a schematic cross-section of the insert of the embodiment of Fig. 1. As seen, the measuring tube arrangement MTA unit is shaped to fit together with the reflector arrangement RA unit. The locking finger LF is integrally formed with the measuring tube arrangement MTA and fits into a through-going opening of the reflector arrangement RA such that the two units MTA, RA are locked in relative position. As seen the reflector arrangement RA is shaped such that a cavity C is formed in an area of the reflector support. This cavity C provides space to allow the locking finger LF to bend upwards during insertion into the housing, and thus allow the protrusion P on the locking finger LF to move upward during insertion. Once the correct position is obtained the protrusion snap into locking engagement with the indentation I of the housing H.

Fig. 3 shows a side view of the same embodiment shown in Fig. 2. In the illustrated embodiment, the reflector arrangement is a single unit with the two reflectors spaced apart with a middle piece. The middle piece is formed to receive and maintain the measuring tube arrangement MTA in correct position between the two reflectors.

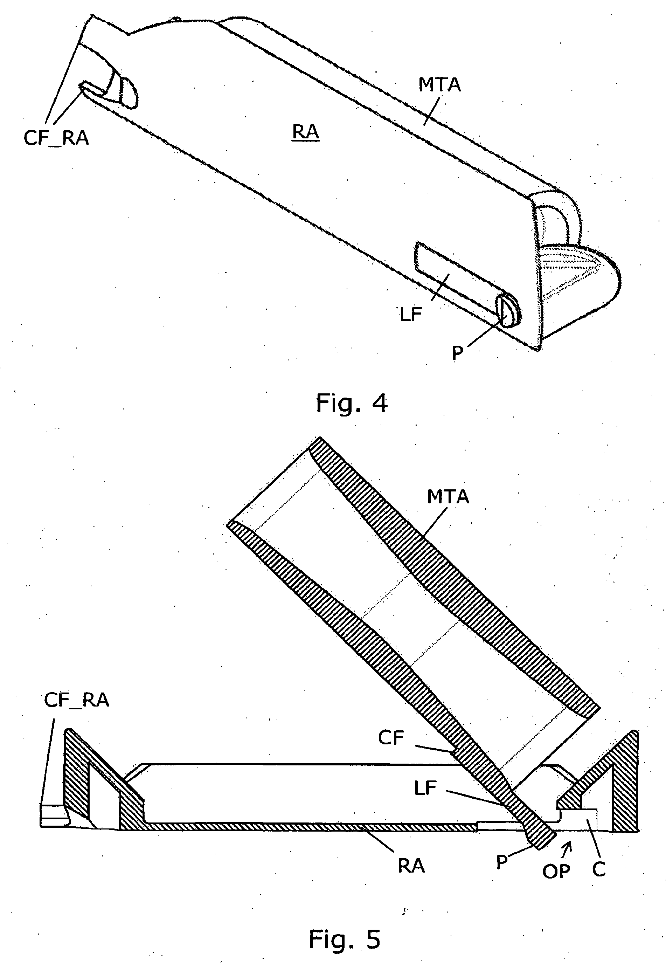

Fig. 4 shows another view of the same insert embodiment as in Figs. 2 and 3, here as a 3D view from below, thus showing that the locking finger LF and the protrusion P formed integrally with the measuring tube arrangement MTA engages with a matching through-going opening in the bottom of the reflector arrangement RA. The contact face CF_RA arranged to face the corresponding face CF_H of the housing H is seen to be formed by two protruding members. The shape of the contact face CF_RA can be of any appropriate shape.

Fig. 5 shows yet another view of the same insert embodiment, namely a schematic cross-sectional view of the measuring tube arrangement during assembly with the reflector arrangement. As seen, the protrusion P of the locking finger LF is inserted in the matching through-going opening OP of the reflector arrangement RA which also includes the cavity C to allow bending of the locking finger LF, once the measuring tube arrangement MTA is in position. The measuring tube arrangement MTA has a contact face CF arranged to face a matching face on the reflector arrangement so as to fix their relative position, once these parts MTA, RA are assembled to form an insert.

## Claims

1. An ultrasonic flow meter unit arranged to measure a flow rate of a fluid, the meter unit comprising:
- a housing (H) having a through-going opening with an inner surface, and at least two openings for receiving at least two associated ultrasonic transducers (T1, T2), and
- an insert provided as a sub-assembly with dimensions enabling insertion of the insert into the housing (H) from one end of the through-going opening, the insert comprising:
- a reflector arrangement (RA) comprising at least two reflectors (R1, R2) arranged to reflect an ultrasound signal emitted from an associated ultrasonic transducer (T1, T2),
- a measuring tube arrangement (MTA) comprising a measuring tube with a flow channel (FC) for receiving the fluid,
**characterized by**
- the housing having an indentation (I) positioned in an area of the inner surface being reachable from at least one of the openings for receiving the ultrasonic transducers (T1, T2) with a straight tool for making the indentation (I),
- the insert further comprising a locking finger (LF) with a protrusion (P) arranged for engagement with the indentation (I) so that the locking finger (LF) is adapted to lock the insert in a longitudinal direction and in a rotational direction within the housing (H) in a predetermined fixed relationship relatively to the associated ultrasonic transducers (T1, T2), wherein the reflector arrangement (RA) is provided with a cavity (C) for receiving at least the.part of the locking finger (LF) with the protrusion, so that the locking finger (LF) is able to bend into the reflector arrangement (RA).

2. Flow meter unit according to claim 1, wherein the indentation (I) is provided in an area of the inner surface defined by a perpendicular projection of the area of one of the openings (O1, O2) for receiving an associated ultrasonic transducer (T1, T2) onto the inner surface.

3. Flow meter unit according to clairn 1 or 2, wherein the locking finger (LF) comprises elongated member integrally formed with a structure of the insert at one end, wherein the protrusion (P) is positioned in the opposite end of the elongated member, a wherein the elongated member is shaped such that the protrusion (P) is movable relative to the insert structure.

4. Flow meter unit according to any of the preceding claims, wherein the reflector arrangement (RA) and the measuring tube arrangement (MTA) are provided as separate entities that can be assembled to form the insert.

5. Flow meter unit according to claim 4, wherein the locking finger (LF) is formed integrally with the measuring tube arrangement (MTA)

6. Flow meter unit according to any of the claims 1 to 4, wherein the locking finger (LF) is formed integrally with the reflector arrangement (RA).

7. Flow meter unit according to any of claims 4-6, wherein the reflector arrangernent (RA) and the measuring tube arrangement (MRA) are provided as separate monolithic entities.

8. Flow mete unit according to claim 7, wherein the reflector arrangement (RA) and the measuring tube arrangement (MRA) are formed by polymeric materials.

9. Flow meter unit according to any of the preceding claims wherein the inner surface is provided with a contact face (CF_H) to engage with an associated contact face (CF_RA) of the insert, the contact face (CF_H) of the inner surface being position upstream in a flow direction with respect to the loking finger (LF).

10. Flow meter unit according to any of the preceding claims, wherein the housing (H) is a metal housing.

11. An ultrasonic flow meter comprising an ultrasonic flow meter unit according to any of the preceding claims, and at least two ultrasonic transducers (T1, T2) mounted in the at least two openings (01, 02) of the housing (H) and a measurement circuit (MC) operationally connected to the two ultrasonic transducers (T1, T2) and arranged to determine a value representing the flow rate.

12. Ultrasonic flow meter according to claim 12, comprising a calculator unit connected to receive the value representing the flow rate, wherein the calculator unit is arranged to calculate a consumed quantity based on the value representing the flow rate.

## Patentansprüche

1. Ultraschallströmungsmesser-Einheit, angeordnet zum Messen einer Strömungsgeschwindigkeit eines Fluids, wobei der Messer umfasst:
- ein Gehäuse (H) mit einer Durchgangsöffnung mit einer Innenfläche und mindestens zwei Öffnungen zur Aufnahme von mindestens zwei verbundenen Ultraschallwandlern (T1, T2) und
- einen als Unterbaugruppe bereitgestellten Einsatz mit Abmessungen, die das Einsetzen des Einsatzes in das Gehäuse (H) von einem Ende der Durchgangsöffnung ermöglichen, wobei der Einsatz umfasst:
- eine Reflektoranordnung (RA), umfassend mindestens zwei Reflektoren (R1, R2), die zum Reflektieren eines von einem verbundenen Ultraschallwandler (T1, T2) ausgesendeten Ultraschallsignals angeordnet sind,
- eine Messrohranordnung (MTA), umfassend ein Messrohr mit einem Durchflusskanal (FC) zur Aufnahme des Fluids,
**dadurch gekennzeichnet, dass**
- das Gehäuse eine Vertiefung (I) angeordnet in einem Bereich der Innenfläche aufweist, der mit einem geraden Werkzeug zur Herstellung der Vertiefung (I) von mindestens einer der Öffnungen für die Aufnahme der Ultraschallwandler (T1, T2) erreichbar ist,
- der Einsatz weiterhin einen Verriegelungsfinger (LF) mit einem Vorsprung (P) umfasst, der zum Eingriff in die Vertiefung (I) angeordnet ist, sodass der Verriegelungsfinger (LF) dazu beschaffen ist, den Einsatz in einer Längsrichtung und in einer Rotationsrichtung im Gehäuse (H) in einem vorbestimmten unveränderlichen Verhältnis relativ zu den verbundenen Ultraschallwandlern (T1, T2) zu verriegeln, wobei die Reflektoranordnung (RA) mit einem Hohlraum (C) zur Aufnahme mindestens des Teils des Verriegelungsfingers (LF) mit dem Vorsprung versehen ist, sodass der Verriegelungsfinger (LF) in die Reflektoranordnung (RA) gebogen werden kann.

2. Strömungsmesser-Einheit nach Anspruch 1, wobei die Vertiefung (I) in einem Bereich der Innenfläche vorgesehen ist, die durch eine senkrechte Projektion der Fläche einer der Öffnungen (01, 02) zur Aufnahme eines verbundenen Ultraschallwandlers (T1 T2) auf die Innenfläche festgelegt ist.

3. Strömungsmesser-Einheit nach Anspruch 1 oder 2, wobei der Verriegelungsfinger (LF) ein längliches Glied umfasst, das einstückig mit einer Struktur des Einsatzes an einem Ende ausgebildet ist, wobei der Vorsprung (P) am gegenüberliegenden Ende des länglichen Glieds angeordnet ist und wobei das längliche Glied derart ausgebildet ist, dass der Vorsprung (P) relativ zur Einsatzstruktur beweglich ist.

4. Strömungsmesser-Einheit nach einem der vorhergehenden Ansprüche, wobei die Reflektoranordnung (RA) und die Messrohranordnung (MTA) als getrennte Einheiten bereitgestellt werden, die unter Ausbildung des Einsatzes zusammengesetzt werden können.

5. Strömungsmesser-Einheit nach Anspruch 4, wobei der Verriegelungsfinger (LF) einstückig mit der Messrohranordnung (MTA) ausgebildet ist.

6. Strömungsmesser-Einheit nach einem der Ansprüche 1-4, wobei der Verriegelungsfinger (LF) einstückig mit der Reflektoranordnung (RA) ausgebildet ist.

7. Strömungsmesser-Einheit nach einem der Ansprüche 4-6, wobei die Reflektoranordnung (RA) und die Messrohranordnung (MTA) als getrennte monolithische Einheiten bereitgestellt werden.

8. Strömungsmesser-Einheit nach Anspruch 7, wobei die Reflektoranordnung (RA) und die Messrohranordnung (MTA) aus Polymermaterial ausgebildet sind.

9. Strömungsmesser-Einheit nach einem der vorhergehenden Ansprüche, wobei die Innenfläche mit einer Kontaktfläche (CF_H) zum Eingriff mit einer verbundenen Kontaktfläche (CF_RA) des Einsatzes versehen ist, wobei die Kontaktfläche (CF_H) der Innenfläche in Strömungsrichtung stromaufwärts in Bezug zum Verriegelungsfinger (LF) angeordnet ist.

10. Strömungsmesser-Einheit nach einem der vorhergehenden Ansprüche, wobei das Gehäuse (H) ein Metallgehäuse ist.

11. Ultraschallströmungsmesser, umfassend eine Ultraschallströmungsmesser-Einheit nach einem der vorhergehenden Ansprüche und mindestens zwei Ultraschallwandler (T1, T2), die in den mindestens zwei Öffnungen (01, 02) des Gehäuses (H) montiert sind, und einen Messkreis (MC), der operationell mit den zwei Ultraschallwandlern (T1, T2) verbunden und zur Bestimmung eines die Strömungsgeschwindigkeit darstellenden Werts beschaffen ist.

12. Ultraschallströmungsmesser nach Anspruch 12, umfassend eine zum Erhalt des die Strömungsgeschwindigkeit darstellenden Werts angeschlossene Recheneinheit, wobei die Recheneinheit zur Berechnung einer verbrauchten Menge auf der Grundlage des die Strömungsgeschwindigkeit darstellenden Werts angeordnet ist.

## Revendications

1. Unité débitmètre à ultrasons disposée pour mesurer un débit d'écoulement d'un fluide, l'unité débitmètre comprenant :
- un boîtier (H) possédant une ouverture traversante avec une surface interne, et au moins deux ouvertures pour recevoir au moins deux transducteurs à ultrasons (T1, T2) associés, et
- un insert se présentant sous la forme d'un sous-ensemble dont les dimensions permettent d'insérer l'insert dans le boîtier (H) depuis une extrémité de l'ouverture traversante, l'insert comprenant :
- un dispositif réflecteur (RA) comprenant au moins deux réflecteurs (R1, R2) disposés pour réfléchir un signal ultrasonore émis par un transducteur à ultrasons (T1, T2) associé,
- un dispositif à tube de mesure (MTA) comprenant un tube de mesure muni d'un canal d'écoulement (FC) pour recevoir le fluide,
**caractérisée en ce que**
- le boîtier est muni d'une échancrure (I) positionnée dans une zone de la surface interne pouvant être atteinte depuis au moins une des ouvertures pour recevoir les transducteurs à ultrasons (T1, T2) avec un outil droit pour réaliser l'échancrure (I),
- l'insert comprend également un doigt de verrouillage (LF) possédant une protubérance (P) disposée pour s'engager dans l'échancrure (I) de manière à ce que le doigt de verrouillage (LF) soit adapté pour verrouiller l'insert dans une direction longitudinale et dans une direction rotative à l'intérieur du boîtier (H) dans une relation fixe prédéterminée par rapport aux transducteurs à ultrasons (T1, T2) associés, dans laquelle le dispositif réflecteur (RA) est muni d'une cavité (C) pour recevoir au moins la partie du doigt de verrouillage (LF) possédant la protubérance, de manière à ce que le doigt de verrouillage (LF) puisse se rabattre dans le dispositif réflecteur (RA).

2. Unité débitmètre selon la revendication 1, dans laquelle l'échancrure (I) est située dans une zone de la surface interne définie par une projection perpendiculaire de la zone de l'une des ouvertures (01, 02) pour recevoir un transducteur à ultrasons (T1, T2) associé sur la surface interne.

3. Unité débitmètre selon la revendication 1 ou 2, dans laquelle le doigt de verrouillage (LF) comprend un élément allongé formé d'un seul tenant avec une structure de l'insert à une extrémité, dans laquelle la protubérance (P) est positionnée dans l'extrémité opposée de l'élément allongé, et dans laquelle la forme de l'élément allongé est telle que la protubérance (P) est mobile par rapport à la structure de l'insert.

4. Unité débitmètre selon l'une quelconque des revendications précédentes, dans laquelle le dispositif réflecteur (RA) et le dispositif à tube de mesure (MTA) se présentent sous la forme d'entités séparées qui peuvent être assemblées pour former l'insert.

5. Unité débitmètre selon la revendication 4, dans laquelle le doigt de verrouillage (LF) est formé d'un seul tenant avec le dispositif à tube de mesure (MTA).

6. Unité débitmètre selon l'une quelconque des revendications 1 à 4, dans laquelle le doigt de verrouillage (LF) est formé d'un seul tenant avec le dispositif réflecteur (RA).

7. Unité débitmètre selon l'une quelconque des revendications 4 à 6, dans lequel le dispositif réflecteur (RA) et le dispositif à tube de mesure (MRA) se présentent sous la forme d'entités monolithiques séparées.

8. Unité débitmètre selon la revendication 7, dans laquelle le dispositif réflecteur (RA) et le dispositif à tube de mesure (MRA) sont constitués de matériaux polymères.

9. Unité débitmètre selon l'une quelconque des revendications précédente, dans laquelle la surface interne est munie d'une face de contact (CF_H) pour s'engager avec une face de contact associée (CF_RA) de l'insert, la face de contact (CF_H) de la surface interne étant positionnée en amont dans une direction d'écoulement par rapport au doigt de verrouillage (LF).

10. Unité débitmètre selon l'une quelconque des revendications précédentes, dans laquelle le boîtier (H) est un boîtier métallique.

11. Débitmètre à ultrasons comprenant une unité débitmètre à ultrasons selon l'une quelconque des revendications précédentes, et au moins deux transducteurs à ultrasons (T1, T2) montés dans les au moins deux ouvertures (01, 02) du boîtier (H) et un circuit de mesure (MC) raccordé de manière opérationnelle aux deux transducteurs à ultrasons (T1, T2) et disposé pour déterminer une valeur représentant la vitesse d'écoulement.

12. Débitmètre à ultrasons selon la revendication 12, comprenant une unité de calcul raccordée pour recevoir la valeur représentant la vitesse d'écoulement, dans lequel l'unité de calcul est disposée pour calculer une quantité consommée sur la base de la valeur représentant la vitesse d'écoulement.
